# DEMANDE DE BREVET EUROPEEN

(11) **EP 1 647 450 A1**
(43) Date de publication de la demande: **19.04.2006**
(21) Numéro de dépôt: 05300806.6
(22) Date de dépôt: 10.10.2005
(51) Int. Cl.: B60R 13/08, B62D 29/00

(54) **Elément creux de tôlerie rempli de flocons d'isolation**

(30) Priorité: 15.10.2004 FR 0410894
(71) Demandeur: Renault s.a.s., 92100 Boulogne Billancourt (FR)
(72) Inventeur: Bouillon, Jean-Charles, 78340, Les Clayes sous Bois (FR)

(57) **Abrégé**

L'invention concerne un élément (10) creux de tôlerie pour un véhicule automobile, notamment réalisé par l'assemblage d'au moins deux panneaux (12, 14) de tôle délimitant une cavité (16), caractérisé en ce qu'il est rempli de flocons (18) de mousse en matériau synthétique, pour éviter la propagation par résonance des sons et/ou des vibrations produits par le fonctionnement du véhicule.

## Description

L'invention concerne un élément creux de tôlerie pour un véhicule automobile.

L'invention concerne plus particulièrement un élément creux de tôlerie pour un véhicule automobile, notamment réalisé par l'assemblage d'au moins deux panneaux de tôle délimitant une cavité.

On connaît de nombreux exemples d'éléments creux de ce type.

Il s'agit par exemple de longerons ou d'éléments tubulaires, résultant de l'assemblage d'au moins deux panneaux emboutis de tôle, faisant partie d'un ensemble de structure de caisse du véhicule automobile.

Un inconvénient connu de ces éléments creux est qu'ils ont la faculté de transmettre voire d'amplifier les sons et les vibrations auxquels est soumis le véhicule.

En particulier, les longerons d'un véhicule automobile sont particulièrement aptes à transmettre à l'intérieur de l'habitacle dudit véhicule les sons et vibrations produits par le moteur thermique du véhicule ou par les éléments de suspension.

Pour remédier à cet inconvénient, il est connue de remplir des éléments creux de ce type par injection de mousse de polyuréthane expansée.

A cet effet, on injecte dans l'élément creux à remplir les deux constituants que sont le polyol et l'isocyanate, dont la réaction produit la mousse de polyuréthane. La réaction de polymérisation se produit à l'intérieur du corps creux.

Cette conception présente l'inconvénient de ne pouvoir être appliquée qu'à un élément creux dépourvu d'orifices, sous peine de voir les composants destinés à former la mousse de polyuréthane s'évacuer de l'élément creux avant même que la mousse n'ait polymérisée.

La plupart des élément creux utilisés en construction automobile comportent des orifices destinés à favoriser l'évacuation des revêtements de cataphorèse lors de la préparation de la caisse du véhicule. Il est donc nécessaire, à l'issue du traitement de cataphorèse et avant l'injection de mousse, d'obturer tous ces orifices par lesquels les composants de la mousse pourraient s'évacuer, ce qui grève considérablement le temps de préparation de la caisse.

Pour remédier à cet inconvénient, on a proposé dans le document FR-2.539.693 d'introduire dans l'élément creux, préalablement à l'injection de mousse, une enveloppe souple qui est destinée à contenir la mousse. Cette conception permet de se dispenser d'obturer les orifices de l'élément creux.

Toutefois, ces deux conceptions posent un problème lors du recyclage du véhicule lorsque celui-ci est arrivé en fin de vie.

Il est en effet extrêmement difficile dans les deux cas de séparer la mousse des panneaux de tôle lorsque le véhicule est recyclé, celle-ci formant un bloc compact épousant les anfractuosités de l'élément creux.

Pour remédier à cet inconvénient, l'invention propose un nouvelle conception d'un élément creux de tôlerie pouvant être facilement rempli et recyclé.

Dans ce but, l'invention propose un élément creux du type décrit précédemment, caractérisé en ce qu'il est rempli de flocons de mousse en matériau synthétique, pour éviter la propagation par résonance des sons et/ou des vibrations produits par le fonctionnement du véhicule.

Selon d'autres caractéristiques de l'invention :
- l'élément creux comporte au moins un orifice, destiné notamment à l'évacuation de revêtements de traitement par cataphorèse, et les flocons sont chacun d'une dimension supérieure à celle de l'orifice,
- l'élément creux comporte au moins un orifice supplémentaire de remplissage par les flocons qui est susceptible d'être obturé par un bouchon,
- les flocons proviennent du recyclage d'éléments en mousse, notamment des panneaux insonorisants, des assises ou dossiers de sièges pour véhicules automobiles, ou des matelas de literie.

L'invention concerne aussi un procédé de remplissage d'un élément creux de tôlerie du type décrit précédemment, caractérisé en ce qu'il comporte au moins une étape de remplissage au cours de laquelle on remplit l'élément creux avec des flocons en utilisant un dispositif de soufflage comportant, d'amont en aval :
- un réservoir de flocons,
- un groupe de soufflage de flocons, alimenté par le réservoir,
- un tube, dont une extrémité est abouchée au groupe de soufflage de flocons, et dont l'extrémité libre est abouchée à l'orifice supplémentaire de remplissage de l'élément creux.

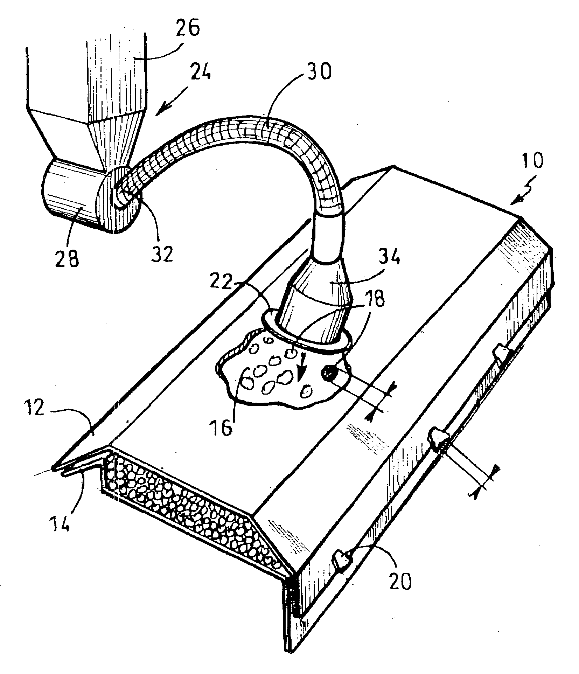

D'autres caractéristiques et avantages de l'invention apparaîtront à la lecture de la description détaillée qui suit pour la compréhension de laquelle on se reportera aux dessin annexé dans lequel la figure unique représente un élément creux de tôlerie en cours de remplissage.

Dans la description qui va suivre, des chiffres de référence identiques désignent des pièces identiques ou ayant des fonctions similaires.

On a représenté sur la figure unique un élément 10 creux de tôlerie pour un véhicule automobile. De manière connue, l'élément 10 creux est réalisé par l'assemblage d'au moins deux panneaux de tôle 12, 14 délimitant une cavité 16.

Conformément à l'invention, l'élément creux 10 est rempli de flocons 18 de mousse en matériau synthétique, pour éviter la propagation par résonance des sons et/ou des vibrations produits par le fonctionnement du véhicule.

De manière connue, l'élément creux 10 comporte au moins un orifice 20 de dimension "d". Cet orifice 20 est destiné notamment à l'évacuation de revêtements de traitement par cataphorèse dans lesquels la caisse est plongée lors de la préparation de la caisse du véhicule. Conformément à l'invention, les flocons 18 sont chacun d'une dimension "D" supérieure à celle de l'orifice 20, de sorte qu'ils ne peuvent s'échapper de l'élément 10 creux.

Dans le mode réalisation préféré de l'invention, les flocons 18 proviennent du recyclage d'éléments en mousse, notamment des panneaux insonorisants, des assises ou dossiers de sièges pour véhicules automobiles, ou des matelas de literie.

Pour premettre le remplissage de l'élément creux 10 avec les flocons 18, l'élément creux 18 comporte au moins un orifice 22 supplémentaire de remplissage. Cet orifice 22 est par exemple découpé lors de l'emboutissage du panneau de tôle 12 avant son assemblage avec le panneau de tôle 14, et il est susceptible d'être obturé par un bouchon (non représenté) à l'issue du remplissage de l'élément 10 par les flocons 18.

Dans cette configuration, comme l'illustre la figure unique, un procédé de remplissage d'un élément 10 creux de tôlerie du type décrit précédemment comporte au moins une étape 10 de remplissage au cours de laquelle on remplit l'élément 10 creux avec des flocons 18 en utilisant un dispositif 24 de soufflage comportant, d'amont en aval :
- un réservoir 26 de flocons,
- un groupe 28 de soufflage des flocons 18, alimenté par le réservoir 26,
- un tube 30, dont une extrémité 32 est abouchée au groupe de soufflage de flocons, et dont l'extrémité libre 34 est abouchée à l'orifice 22 supplémentaire de remplissage de l'élément 10 creux.

L'invention permet donc de remplir aisément un élément 10 creux de carrosserie de flocons dans le but d'assurer son insonorisation et/ou son isolation aux vibrations. Ces flocons peuvent être aisément enlevés de l'élément 10 en vue de son recyclage, et ils présentent aussi l'avantage de ne pas former un bloc compact comme les mousses connues de l'état de la technique, qui sont difficiles à retraiter dans le cas d'un recyclage du véhicule.

## Revendications

1. Elément (10) creux de tôlerie pour un véhicule automobile, notamment réalisé par l'assemblage d'au moins deux panneaux (12, 14) de tôle délimitant une cavité (16), **caractérisé en ce qu'**il est rempli de flocons (18) de mousse en matériau synthétique, pour éviter la propagation par résonance des sons et/ou des vibrations produits par le fonctionnement du véhicule.

2. Elément (10) creux selon la revendication précédente, **caractérisé en ce qu'**il comporte au moins un orifice (20), destiné notamment à l'évacuation de revêtements de traitement par cataphorèse, et **en ce que** les flocons (18) sont chacun d'une dimension (D) supérieure à la dimension (d) de l'orifice (20).

3. Elément (10) creux selon l'une quelconque des revendications précédentes, **caractérisé en ce qu'**il comporte au moins un orifice (22) supplémentaire de remplissage par les flocons (18) qui est susceptible d'être obturé par un bouchon.

4. Elément (10) creux selon l'une quelconque des revendications précédentes, **caractérisé en ce que** les flocons (18) proviennent du recyclage d'éléments en mousse, notamment des panneaux insonorisants, des assises ou dossiers de sièges pour véhicules automobiles, ou des matelas de literie.

5. Procédé de remplissage d'un élément (10) creux de tôlerie selon les revendications 1 à 3 prises en combinaison, **caractérisé en ce qu'**il comporte au moins une étape de remplissage au cours de laquelle on remplit l'élément creux (10) avec des flocons (18) en utilisant un dispositif (24) de soufflage comportant, d'amont en aval :
- un réservoir (26) de flocons,
- un groupe (28) de soufflage de flocons, alimenté par le réservoir (26),
- un tube (30), dont une extrémité (32) est abouchée au groupe (28) de soufflage de flocons, et dont l'extrémité libre (34) est abouchée à l'orifice (16) supplémentaire de remplissage de l'élément creux (10).
